(19) Europäisches Patentamt
European Patent Office
Office européen des brevets

(11) EP 0 723 325 B1

(12) **FASCICULE DE BREVET EUROPEEN**

(45) Date de publication et mention
de la délivrance du brevet:
**06.05.1999 Bulletin 1999/18**

(51) Int Cl.⁶: **H02H 7/26**

(21) Numéro de dépôt: **95410149.9**

(22) Date de dépôt: **27.12.1995**

(54) **Dispositif de contrôle-commande d'un système électrique**

Überwachungs- und Steuerungsvorrichtung für ein elektrisches System

Monitoring and control device for an electrical system

(84) Etats contractants désignés:
**DE ES GB IT SE**

(30) Priorité: **17.01.1995 FR 9500557**

(43) Date de publication de la demande:
**24.07.1996 Bulletin 1996/30**

(73) Titulaire: **SCHNEIDER ELECTRIC SA**
**92100 Boulogne Billancourt (FR)**

(72) Inventeur: **Souchere, Claude**
**F-38050 Grenoble Cedex 09 (FR)**

(74) Mandataire: **Jouvray, Marie-Andrée et al**
**Schneider Electric SA,**
**Sce. Propriété Industrielle**
**38050 Grenoble Cédex 09 (FR)**

(56) Documents cités:
**EP-A- 0 255 505**          **US-A- 4 161 027**

## Description

L'invention concerne un dispositif de contrôle-commande d'un système électrique comportant une ligne d'arrivée connectée par un disjoncteur d'arrivée à une pluralité de lignes de départ , chaque ligne de départ comportant un disjoncteur de départ associé, le dispositif de contrôle-commande comportant un dispositif de protection électronique associé à chaque disjoncteur et comportant une unité de traitement connectée à un microprocesseur de communication , l'unité de traitement ayant une entrée connectée à des moyens de mesure du courant circulant dans la ligne associée et une sortie reliée à un dispositif de commande du disjoncteur associé, un réseau de communication connectant entre eux les microprocesseurs de communication.

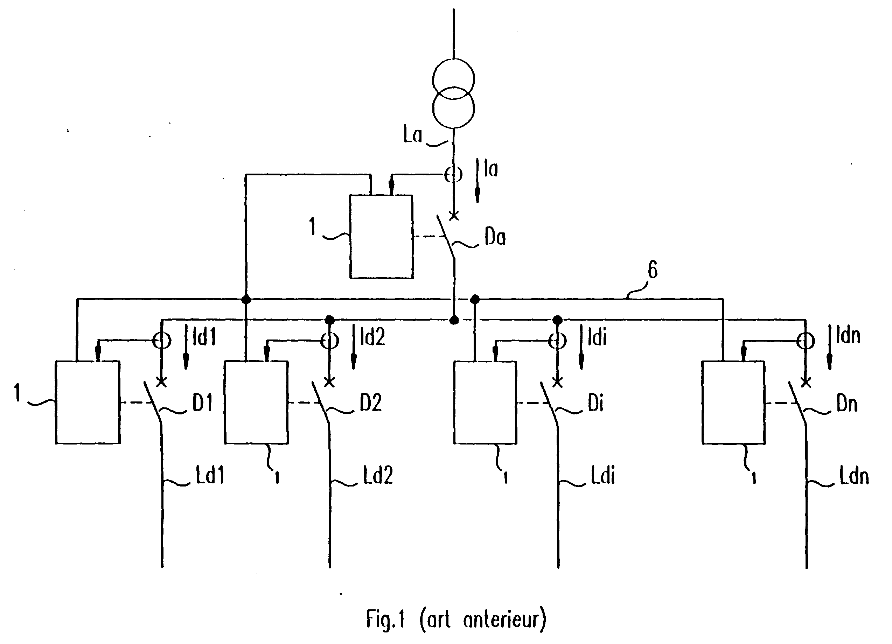

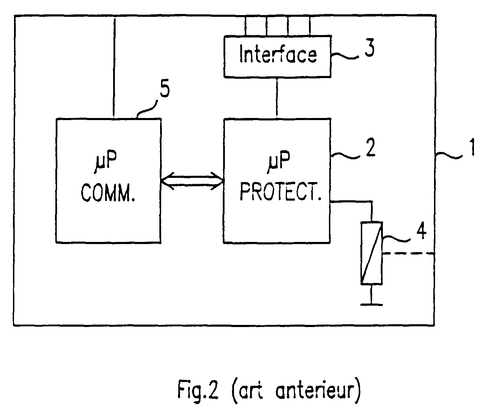

Une sous-station moyenne-tension, on un poste-source, de type classique comporte, comme représenté à la figure 1, une ligne d'arrivée La connectée par un disjoncteur d'arrivée Da à une pluralité de lignes de départ Ld1, Ld2,...Ldi,...Ldn. Un disjoncteur de départ Di est disposé sur chaque ligne de départ Ldi. Un dispositif de protection électronique 1 est associé à chaque disjoncteur. Il surveille la valeur du courant, Ia, Idi, circulant dans la ligne associée et commande l'ouverture du disjoncteur correspondant, Da, Di, en cas de défaut sur la ligne, c'est à dire lorsque la valeur du courant dépasse un seuil de protection prédéterminé. Classiquement tous les dispositifs de protection 1 sont du même type, par exemple tels que représentés à la figure 2. Le dispositif 1 comporte une unité de traitement, constituée par un microprocesseur de protection 2. Le microprocesseur 2 reçoit, par l'intermédiaire d'une interface 3, des signaux de mesure du courant circulant dans la ligne associée. Le microprocesseur 2 compare la valeur du courant mesuré au seuil de protection correspondant et, en cas de défaut, fournit un signal de déclenchement à une bobine 4 de déclenchement du disjoncteur associé. Dans le mode de réalisation connu représenté à la figure 2, le microprocesseur de protection 2 est connecté, par un bus interne, à un microprocesseur de communication 5. Les microprocesseurs de communication 5 des différents dispositifs de protection 1 sont reliés par un réseau de communication 6 (fig. 1). Un tel réseau de communication est généralement constitué par un réseau de terrain, par exemple de type FIP, JBUS,...

Les valeurs des courants des lignes de départ mesurés dans les dispositifs 1 associés aux lignes de départ peuvent ainsi être transmises, par l'intermédiaire de leur microprocesseur de communication 5 et du réseau de communication 6, au dispositif 1 associé à la ligne d'arrivée, ou éventuellement à un organe de surveillance à distance, non représenté, où elles peuvent être affichées de façon centralisée.

Les seuils de protection des différents dispositifs de protection 1 sont programmés localement de manière à ce qu'un défaut dans une ligne de départ provoque l'ouverture du disjoncteur associé à cette ligne. Par contre, un tel défaut ne doit pas provoquer l'ouverture du disjoncteur d'arrivée, dont le seuil de protection est relativement élevé, de manière a assurer la continuité de fourniture du courant aux autres lignes de départ, qui ne sont pas en défaut.

Si le dispositif de protection 1 associé à une ligne de départ est défaillant, il ne protège plus cette ligne contre les défauts du système, par exemple court-circuit ou, mise à la terre, affectant cette ligne.

Dans de nombreux cas, le dispositif de protection 1 associé à la ligne d'arrivée n'est pas suffisamment sensible pour détecter un défaut sur une ligne de départ en cas de non fonctionnement du disjoncteur associé à la ligne de départ. C'est le cas notamment si un court-circuit se produit en bout de ligne de départ, à une distance importante de la connexion entre la ligne de départ et la ligne d'arrivée. A titre d'exemple, un court-circuit biphasé se produisant sur une ligne de départ à une dizaine de kilomètres de la ligne d'arrivée, provoque dans la ligne d'arrivée un courant qui peut être de l'ordre de 800 A, insuffisant pour déclencher le disjoncteur d'arrivée. Si un tel court-circuit se prolonge il peut provoquer un incendie. Par ailleurs, si le seuil de protection du courant de la ligne d'arrivée est abaissé pour que le disjoncteur associé à la ligne d'arrivée déclenche, la fourniture du courant est interrompue pour toutes les lignes de départ, ce qui peut également être catastrophique.

L'invention a pour but de pallier les inconvénients des dispositifs de contrôle-commande actuels en cas de défaillance d'un dispositif de protection associé à une ligne de départ.

Ce but est atteint par le fait que le microprocesseur de communication du dispositif de protection électronique associé à chaque ligne de départ comporte une sortie additionnelle reliée au dispositif de commande du disjoncteur associé et des moyens de transmission au réseau de communication de premiers signaux représentatifs du courant circulant dans la ligne de départ correspondante, l'unité de traitement du dispositif de protection électronique associé à la ligne d'arrivée comportant des moyens de calcul pour calculer, à partir desdits premiers signaux, la somme vectorielle des courants mesurés dans les lignes de départ, et pour calculer la différence vectorielle entre le courant mesuré dans la ligne d'arrivée et ladite somme, des moyens de mise en mémoire de seuils de protection associés à chaque ligne de départ, des moyens de détermination d'un défaut de fonctionnement de l'unité de traitement associée à une ligne de départ, des moyens de comparaison pour, en cas de défaut de fonctionnement de l'unité de traitement associée à une ligne de départ, comparer ladite différence vectorielle aux seuils de protection correspondants, conformément à une courbe caractéristique de protection de secours prédéterminée et des moyens de production d'un signal de déclenchement du disjoncteur associé si ladite différence dépasse ladite courbe caractéristique, ledit signal de déclenchement étant transmis au dispositif de commande du disjoncteur concerné par l'intermédiaire du microprocesseur de communication du dispositif de protection électronique associé à la ligne d'arrivée, du réseau de communication et du microprocesseur de communication du dispositif de protection électrique associé à la ligne de départ concernée.

Selon un développement de l'invention, l'unité de traitement du dispositif de protection électronique associé à une ligne de départ comporte des moyens de production de seconds signaux, représentatifs du bon fonctionnement de ladite unité de traitement, lesdits seconds signaux étant transmis au réseau de communication , les moyens de détermination d'un défaut de fonctionnement prenant en compte lesdits seconds signaux.

Pour réaliser les calculs vectoriels nécessaires, chaque dispositif de protection électronique comporte des moyens de synchronisation de manière à associer dans les premiers signaux une date à chaque valeur de courant ou, de préférence, des moyens de détermination du déphasage entre les signaux de courant mesurés par le dispositif de mesure associé et des signaux de référence communs, les premiers signaux comportant des signaux représentatifs du déphasage.

D'autres avantages et caractéristiques ressortiront plus clairement de la description qui va suivre de modes particuliers de réalisation de l'invention, donnés à titre d'exemples non limitatifs et représentés aux dessins annexés dans lesquels :

La figure 1 représente, sous forme schématique, un dispositif de contrôle-commande selon l'art antérieur.

La figure 2 illustre plus en détail un mode de réalisation connu des dispositifs de protection du dispositif selon la figure 1.

La figure 3 représente un dispositif selon l'invention.

La figure 4 représente un organigramme de fonctionnement du microprocesseur de protection du dispositif de protection associé à la ligne d'arrivée du dispositif selon la figure 3.

Les figures 5 et 6 représentent deux modes particuliers de réalisation de détails des dispositifs de protection du dispositif selon la figure 3.

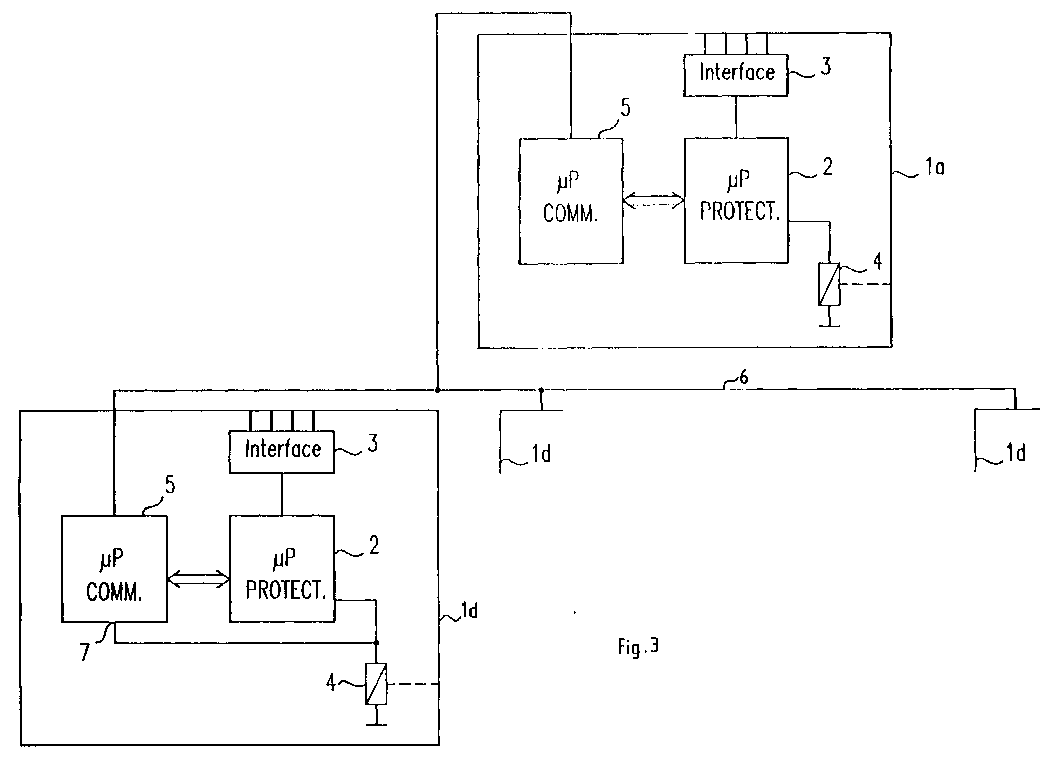

Sur la figure 3, les lignes La, Ldi du réseau ne sont pas représentées pour ne pas compliquer inutilement la figure. Comme sur la figure 1, le réseau de communication 6 connecte les microprocesseurs de communication 5 d'un dispositif de protection (1a sur la figure 3) associé à la ligne d'arrivée aux microprocesseurs de communication 5 des dispositifs de protection (1d sur la figure 3) associés aux lignes de départ. La structure du dispositif de protection 1a est identique à celle du dispositif 1 connu de la figure 2. Par contre, dans chaque dispositif 1d, le microprocesseur de communication 5 comporte une sortie additionnelle 7, connectée au dispositif de commande du disjoncteur associé, c'est-à-dire à la bobine de déclenchement 4 sur la figure 3.

Ainsi le disjoncteur Di, associé à une ligne de départ Ldi, est ouvert, par l'intermédiaire de la bobine de déclenchement 4, lorsqu'il reçoit un signal de déclenchement en provenance soit du microprocesseur de protection 2, soit du microprocesseur de communication 5.

Lorsque le microprocesseur de protection 2 fonctionne correctement, c'est lui qui produit un éventuel signal de déclenchement. Par contre, si le microprocesseur de protection 2 est défaillant, il ne détecte plus un défaut sur la ligne de départ associée. Mais le dispositif de protection 1a comporte des moyens de détection d'un défaut sur une ligne de départ Di lorsque le microprocesseur de protection 2 associé à cette ligne de départ est défaillant. En effet, chaque microprocesseur de protection reçoit une mesure de courant circulant dans la ligne, d'arrivée ou de départ, associée. Le microprocesseur 2 associé à chaque ligne de départ communique cette mesure, à travers le microprocesseur de communication 5 correspondant et le réseau 6, au dispositif de protection 1a. Dans le dispositif 1a, les mesures des courants dans toutes les lignes de départ sont transmises par le microprocesseur de communication 5 au microprocesseur de traitement 2, si tous les dispositifs 1d fonctionnent correctement.

Or, le courant circulant dans la ligne d'arrivée est, à chaque instant, égal à la somme vectorielle des courants circulant dans les lignes de départ. Ainsi, si l'ensemble des dispositifs de protection fonctionne normalement, la différence entre la mesure du courant Ia dans la ligne d'arrivée et la somme vectorielle des mesures des courants Id dans les lignes de départ est nulle :

$$\vec{Ia} - \sum_{1}^{n} \vec{Id} = 0 \qquad\qquad (1)$$

Par contre, si le microprocesseur de protection 2 associé à la ligne de départ Ldi est défaillant, il ne transmet plus la mesure correspondante Idi. Cette défaillance est détectée par le microprocesseur de protection 2 associé à la ligne d'arrivée qui calcule la différence :

$$\vec{\Delta I} = \vec{Ia} - \sum_{1}^{n} \vec{Id} \qquad (2)$$

Dans ce cas

$$\Delta I = \vec{Idi}. \qquad (3)$$

Le dispositif de protection 1a associé à la ligne d'arrivée connaît ainsi de façon indirecte, le courant Idi circulant dans la ligne de départ Ldi dont le microprocesseur de protection est défaillant. Le dispositif 1a comporte en mémoire les seuils de protection associés à chaque départ. Il peut alors comparer le courant Idi ainsi déterminé au seuil de protection correspondant et, le cas échéant, envoyer un signal de déclenchement au disjoncteur Di par l'intermédiaire des microprocesseurs de communication 5 et du réseau 6.

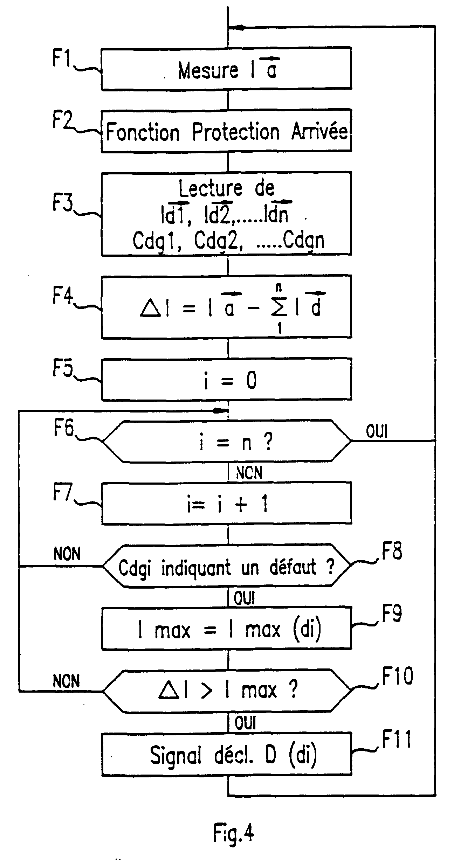

L'organigramme de fonctionnement de la figure 4 illustre plus en détail un mode de fonctionnement particulier du microprocesseur de protection 2 du dispositif 1a.

Une première étape F1, de mesure du courant Ia circulant dans la ligne d'arrivée, est suivie d'une étape F2 réalisant la fonction de protection, classique, de la ligne d'arrivée. En cas de défaut dans la ligne d'arrivée un ordre de déclenchement du disjoncteur associé Da est envoyé. Puis, pendant une étape F3, le microprocesseur de protection 2 du dispositif 1a lit les valeurs des courants de départ et des signaux Cdg fournis périodiquement par les circuits de chien de garde des microprocesseurs de protection 2 associés aux lignes de départ. Les signaux de courant et de chien de garde en provenance des dispositifs 1d sont transmis au microprocesseur 2 du dispositif 1a par le réseau de communication 6. Il calcule ensuite (étape F4) la différence ΔI conformément à l'équation (2) ci-dessus, entre le courant d'arrivée et la somme vectorielle des courants de départ. Puis le fonctionnement des microprocesseurs 2 des dispositifs 1d est vérifié. Pour cela, une grandeur i est mise à zéro pendant l'étape suivante (F5). Dans une étape F6, i est ensuite comparée à la valeur n, préalablement mise en mémoire, correspondant au nombre de lignes de départ connectées à la ligne d'arrivée. Si i = n , alors le microprocesseur 2 repasse à l'étape F1. Sinon, la grandeur i est remplacée par i + 1 dans une étape F7. Puis, pendant une étape F8, le microprocesseur 2 du dispositif 1a détermine si les signaux de chien de garde Cdgi sont ou non représentatifs d'un défaut du microprocesseur associé.

En l'absence de défaut du microprocesseur de protection du dispositif 1d associé à la ligne de départ Ldi, le microprocesseur 2 du dispositif 1a revient à l'étape F6. Sinon, dans une étape F9, une fonction protection de secours est paramétrée avec des seuils de protection correspondants aux seuils de la fonction de protection associée au microprocesseur défaillant, les seuils de protection associés à tous les départs ayant au préalable été mis en mémoire par le microprocesseur 2 du dispositif 1a. Sur la figure 4, un mode de réalisation simplifié est représenté, dans lequel un signal de déclenchement est produit dès que le courant mesuré dépasse un seuil de courant prédéterminé I max. Ainsi, dans l'étape F9 le seuil de protection I max prend la valeur I max (di) correspondante de la ligne de départ Ldi dont le microprocesseur de protection est défaillant. La différence ΔI est ensuite (F10) comparée au seuil de protection I max. Si la différence est inférieure au seuil, le microprocesseur repasse à l'étape F6. Sinon, un signal de déclenchement D (di) est produit dans une étape F11, puis le microprocesseur revient à l'étape F1.

Comme indiqué ci-dessus la courbe caractéristique de déclenchement de la fonction de protection de secours peut être plus complexe, par exemple temporisée, et les étapes de paramétrage de la fonction (F9) et d'activation de la fonction (F10) sont alors modifiées en conséquence.

Selon une variante de réalisation, l'existence éventuelle d'un défaut de fonctionnement du microprocesseur de protection 2 du dispositif 1d associé à la ligne de départ Ldi peut dans l'étape F8, être détectée par la non-réception du signal de courant Idi correspondant, qui est considérée comme significative d'un tel défaut.

Lorsqu'un signal de déclenchement D (di) est produit (F11) dans le microprocesseur de protection 2 du dispositif 1a, ce signal est transmis par le microprocesseur de communication 5 du dispositif 1a et par le réseau de communication 6 au microprocesseur de communication 5 du dispositif 1d associé à la ligne Ldi. Celui-ci envoie alors sur sa sortie additionnelle 7 un signal de déclenchement du disjoncteur Di. Un défaut de la ligne de départ Ldi est donc ainsi détecté malgré la défaillance du microprocesseur de protection correspondant et le disjoncteur Di ouvert. Le dispositif assure ainsi à la fois la sécurité du système électrique, grâce au déclenchement en cas de défaut, et la disponibilité du courant dans les lignes de départ saines.

Ainsi la fonction d'un microprocesseur de protection 2 défaillant du dispositif de protection 1d d'une ligne de départ est réalisée au moyen du microprocesseur de communication 5 associé et du microprocesseur de protection 2 du dispositif de protection 1a de la ligne d'arrivée.

Cette redondance est réalisée avec très peu de moyens supplémentaires dans des dispositifs de contrôle-commande de type connu. Il suffit en effet d'ajouter une sortie additionnelle à chaque microprocesseur de communication des lignes de départ pour commander la bobine de déclenchement correspondante et de modifier le programme du microprocesseur de protection de la ligne d'arrivée. Ce dernier détermine la valeur du courant circulant dans la ligne de départ dont le dispositif de protection est défaillant, la compare au seuil correspondant, et le cas échéant, envoie un signal de déclenchement approprié au microprocesseur de communication associé au microprocesseur de protection défaillant.

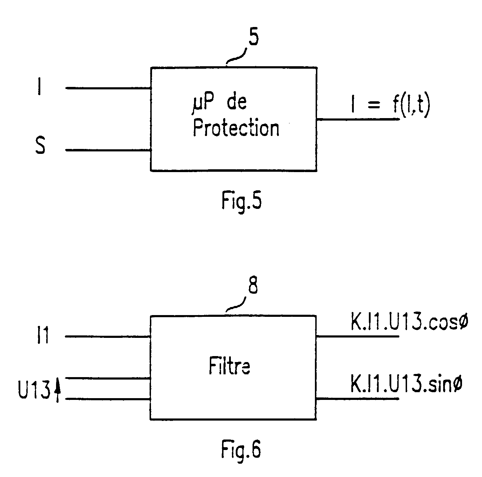

Les figures 5 et 6 montrent deux détails de réalisation des dispositifs de protection électronique destinés à fournir des signaux représentatifs des vecteurs de courant, Ia ou Id, pour réaliser les calculs vectoriels dans les étapes F4 et F5.

Le microprocesseur de protection de la figure 5 reçoit de l'interface 3 des signaux de courant I. Il reçoit également des signaux de synchronisation S, de manière à fournir en sortie des signaux de courant datés.

Pour éviter d'avoir à dater chaque vecteur de courant, il est possible d'utiliser une référence commune à tous les signaux de courant. La détermination du déphasage entre les signaux de courant et cette référence commune permet de simplifier les calculs vectoriels des étapes F4 et F5. Selon un mode de réalisation préférentiel, dans un système polyphasé, par exemple triphasé, une tension entre phases ou une tension simple est utilisée comme référence commune.

Sur la figure 6, un filtre numérique 8, connecté à la sortie de l'interface 3, reçoit à la fois des signaux représentatifs de la tension $U13$ entre les phases 1 et 3 et des signaux représentatifs du courant $I1$ dans la phase 1 par exemple. Il fournit en sortie des signaux $K.I1.U13.\cos\varnothing$ et $K.I1.U13.\sin\varnothing$, où $\varnothing$ est le déphasage entre $I1$ et $U13$ et $K$ une constante prédéterminée. Les signaux de sortie du filtre 8 sont utilisés par le microprocesseur de protection et, lorsqu'il s'agit d'un dispositif de protection 1d associé à une ligne de départ, transmis au dispositif de protection 1a de la ligne d'arrivée qui effectue les calculs vectoriels nécessaires. Bien entendu, les courants de toutes les phases sont traités de manière analogue. La fonction du filtre numérique peut être réalisée par le microprocesseur 2 et les valeurs du courant mesurées sont de préférence des valeurs efficaces. On peut montrer que le choix d'une tension entre phases comme référence commune permet d'obtenir des résultats satisfaisants à condition qu'un court-circuit entre les phases 1 et 3 soit éloigné de plus de 300 m du jeu de barres, c'est à dire de la connexion entre les lignes d'arrivée et de départ. Cette condition restrictive n'est pas gênante en pratique, car si un court-circuit entre phases est plus proche du jeu de barres, alors le défaut est, en pratique, toujours suffisamment important pour provoquer l'ouverture du déclencheur d'arrivée.

**Revendications**

1.  Dispositif de contrôle-commande d'un système électrique comportant une ligne d'arrivée (La) connectée par un disjoncteur d'arrivée (Da) à une pluralité (n) de lignes de départ (Ldi), chaque ligne de départ (Ldi) comportant un disjoncteur de départ (Di) associé, le dispositif de contrôle-commande comportant un dispositif de protection électronique (1a, 1d) associé à chaque disjoncteur (Da, Di) et comportant une unité de traitement (2) connectée à un microprocesseur de communication (5), l'unité de traitement (2) ayant une entrée connectée à des moyens de mesure du courant circulant dans la ligne associée et une sortie reliée à un dispositif (4) de commande du disjoncteur (Da, Di) associé, un réseau de communication (6) connectant entre eux les microprocesseurs de communication (5), dispositif caractérisé en ce que le microprocesseur de communication (5) du dispositif de protection électronique (1d) associé à chaque ligne de départ (Ldi) comporte une sortie additionnelle (7) reliée au dispositif (4) de commande du disjoncteur associé (Di) et des moyens de transmission au réseau de communication (6) de premiers signaux représentatifs du courant (Idi) circulant dans la ligne de départ correspondante, l'unité de traitement (2) du dispositif de protection électronique (1a) associé à la ligne d'arrivée (La) comportant des moyens de calcul (F4) pour calculer, à partir desdits premiers signaux, la somme vectorielle des courants mesurés dans les lignes de départ, et pour calculer la différence vectorielle (ΔI) entre le courant (Ia) mesuré dans la ligne d'arrivée et ladite somme, des moyens de mise en mémoire de seuils de protection (I max (di)) associés à chaque ligne de départ, des moyens (F8) de détermination d'un défaut de fonctionnement de l'unité de traitement (2) associée à une ligne de départ (Ldi), des moyens (F10) de comparaison pour, en cas de défaut de fonctionnement de l'unité de traitement associée à une ligne de départ, comparer ladite différence vectorielle (ΔI) aux seuils de protection (I max (di)) correspondants conformément à une courbe caractéristique de protection de secours prédéterminée, et des moyens (F11) de production d'un signal de déclenchement (D(di)) du disjoncteur associé (Di) si la différence dépasse ladite courbe caractéristique, ledit signal de déclenchement étant transmis au dispositif de commande (4) du disjoncteur concerné (Di) par l'intermédiaire du microprocesseur de communication (5) du dispositif de protection électronique (1a) associé à la ligne d'arrivée, du réseau de communication (6) et du microprocesseur de communication (5) du dispositif de protection électrique (1d) associé à la ligne de départ concernée (Ldi).

2. Dispositif selon la revendication 1, caractérisé en ce que l'unité de traitement (2) du dispositif de protection électronique (1d) associé à une ligne de départ (Ldi) comporte des moyens de production de seconds signaux (Cdg), représentatifs du bon fonctionnement de ladite unité de traitement, lesdits seconds signaux étant transmis au réseau de communication (6), les moyens (F9) de détermination d'un défaut de fonctionnement prenant en compte lesdits seconds signaux.

3. Dispositif selon la revendication 1, caractérisé en ce que les moyens (F9) de détermination d'un défaut de fonctionnement détectent la défaillance de l'unité de traitement (2) associée à un ligne de départ (Ldi) par l'absence de réception de premiers signaux en provenance de ladite unité.

4. Dispositif selon l'une quelconque des revendications 1 à 3, caractérisé en ce que chaque dispositif de protection électronique (1a, 1d) comporte des moyens (8) de détermination du déphasage (Ø) entre les signaux de courant mesurés par le dispositif de mesure associé et des signaux de référence communs, les premiers signaux comportant des signaux représentatifs du déphasage.

5. Dispositif selon la revendication 4, caractérisé en ce que le système étant polyphasé, chaque dispositif de protection électronique (1a, 1d) comporte des moyens de mesure d'une tension (U13) entre deux phases du système, ladite tension constituant ladite référence commune.

6. Dispositif selon l'une quelconque des revendications 1 à 3, caractérisé en ce que chaque dispositif de protection électronique comporte des moyens de synchronisation (S) de manière à associer dans les premiers signaux une date à chaque valeur de courant.


**Patentansprüche**

1. Einrichtung zur Steuerung und Überwachung eines elektrischen Systems mit einer Einspeiseleitung (La), die über einen Eingangsleistungsschalter (Da) mit mehreren (n) Abgangsleitungen (Ldi) verbunden ist, wobei jede Abgangsleitung (Ldi) einen zugeordneten Abgangsleistungsschalter (Di) aufweist, die Einrichtung zur Steuerung und Überwachung eine elektronische Schutzeinrichtung (1a, 1d) umfaßt, die jedem Leistungsschalter (Da, Di) zugeordnet ist und eine mit einem Kommunikationsmikroprozessor (5) verbundene Verarbeitungseinheit (2) umfaßt, die Verarbeitungseinheit (2) einen, mit Mitteln zur Messung des die zugeordnete Leitung durchfließenden Stroms verbundenen Eingang sowie einen, mit einem Steuerorgan (4) des zugeordneten Leistungsschalters (Da, Di) verbundenen Ausgang aufweist und ein Kommunikationsnetz (6) die Kommunikationsmikroprozessoren (5) miteinander verbindet, dadurch gekennzeichnet, daß der Kommunikationsmikroprozessor (5) der jeder Abgangsleitung (Ldi) zugeordneten elektronischen Schutzeinrichtung (Id) einen, mit dem Steuerorgan (4) des zugeordneten Leistungsschalters (Di) verbundenen zusätzlichen Ausgang (7) sowie Mittel zur Übertragung von ersten, den Strom (Idi) in der zugehörigen Abgangsleitung abbildenden Signalen an das Kommunikationsnetz (6) umfaßt, wobei die Verarbeitungseinheit (2) der der Einspeiseleitung (La) zugeordneten elektronischen Schutzeinrichtung (1a) Rechenmittel (F4) zur Berechnung der Vektorsumme der in den Abgangsleitungen gemessenen Ströme sowie zur Berechnung der Vektordifferenz ($\Delta$I) zwischen dem in der Einspeiseleitung gemessenen Strom (Ia) und der genannten Summe auf der Grundlage der genannten ersten Signale, Mittel zur Abspeicherung von, jeder Abgangsleitung zugeordneten Schutzansprechwerten (I max (di)), Mittel (F8) zur Bestimmung einer Fehlfunktion der einer Abgangsleitung (Ldi) zugeordneten Verarbeitungseinheit (2), Vergleichsmittel (F10), um bei Auftreten einer Fehlfunktion der einer Abgangsleitung zugeordneten Verarbeitungseinheit die genannte Vektordifferenz ($\Delta$I) gemäß einer festgelegten Notschutzkennlinie mit den zugehörigen Schutzansprechwerten (I max (di)) zu vergleichen, sowie Mittel (F11) zur Erzeugung eines Auslösesignals (D(di)) zur Abschaltung des zugeordneten Leistungsschalters (Di) bei Überschreiten der genannten Kennlinie durch die genannte Differenz umfaßt, wobei das genannte Auslösesignal über den Kommunikationsmikroprozessor (5) der der Einspeiseleitung zugeordneten elektronischen Schutzeinrichtung (1a), das Kommunikationsnetz (6) und den Kommunikationsmikroprozessor (5) der der betroffenen Abgangsleitung (Ldi) zugeordneten elektronischen Schutzeinrichtung (1d) an das Steuerorgan (4) des betreffenden Leistungsschalters (Di) übertragen wird.

**2.** Einrichtung nach Anspruch 1, dadurch gekennzeichnet, daß die Verarbeitungseinheit (2) der einer Abgangsleitung (Ldi) zugeordneten elektronischen Schutzeinrichtung (1d) Mittel zur Erzeugung zweiter Signale (Cdg) umfaßt, die eine fehlerfreie Funktion der genannten Verarbeitungseinheit abbilden und an das Kommunikationsnetz (6) übertragen werden, wobei die Mittel (F9) zur Bestimmung einer Fehlfunktion die genannten zweiten Signale berücksichtigen.

**3.** Einrichtung nach Anspruch 1, dadurch gekennzeichnet, daß die Mittel (F9) zur Bestimmung einer Fehlfunktion den Ausfall der einer Abgangsleitung (Ldi) zugeordneten Verarbeitungseinheit (2) durch Nichtempfang von, durch die genannte Einheit ausgesandten ersten Signalen erfassen.

**4.** Einrichtung nach irgendeinem der Ansprüche 1 bis 3, dadurch gekennzeichnet, daß jede elektronische Schutzeinrichtung (1a, 1d) Mittel (8) zur Bestimmung der Phasenverschiebung (∅) zwischen den von der zugeordneten Meßeinrichtung gemessenen Stromsignalen und gemeinsamen Bezugssignalen umfaßt, wobei die ersten Signale die Phasenverschiebung abbildende Signale umfassen.

**5.** Einrichtung nach Anspruch 4, dadurch gekennzeichnet, daß es sich um ein mehrphasiges System handelt, wobei jede elektronische Schutzeinrichtung (1a, 1d) Mittel zur Messung einer Spannung (U13) zwischen zwei Phasen des Systems umfaßt und die genannte Spannung die genannte gemeinsame Bezugsgröße darstellt.

**6.** Einrichtung nach irgendeinem der Ansprüche 1 bis 3, dadurch gekennzeichnet, daß jede elektronische Schutzeinrichtung Synchronisierungsmittel (S) umfaßt, um jeden Stromwert in den ersten Signalen zeitlich zu definieren.

**Claims**

**1.** A device for control and monitoring of an electrical system comprising an incoming line (La) connected by an incoming circuit breaker (Da) to a plurality (n) of feeder lines (Ldi), each feeder line (Ldi) comprising an associated feeder circuit breaker (Di), the control and monitoring device comprising an electronic protection device (1a, 1d) associated to each circuit breaker (Da, Di) and comprising a processing unit (2) connected to a communication microprocessor (5), the processing unit (2) having an input connected to means for measuring the current flowing in the associated line and an output connected to an operating device (4) of the associated circuit breaker (Da, Di), a communication network (6) connecting the communication microprocessors (5) to one another, a device characterized in that the communication microprocessor (5) of the electronic protection device (1d) associated to each feeder line (Ldi) comprises an additional output (7) connected to the operating device (4) of the associated circuit breaker (Di) and means for transmitting to the communication network (6) first signals representative of the current (Idi) flowing in the corresponding feeder line, the processing unit (2) of the electronic protection device (1a) associated to the incoming line (La) comprising calculation means (F4) to calculate, from said first signals, the vector sum of the currents measured in the feeder lines and to calculate the vector difference (ΔI) between the current (Ia) measured in the incoming line and said sum, means for storing protection thresholds (I max (di)) associated to each feeder line, means (F8) for determining a malfunctioning of the processing unit (2) associated to a feeder line (Ldi), comparison means (F10) for comparing said vector difference (ΔI) to the corresponding protection thresholds (I max (di)), in the event of malfunctioning of the processing unit associated to a feeder line, in accordance with a curve characteristic of predetermined emergency protection, and means (F11) for producing a tripping signal (D(di)) of the associated circuit breaker (Di) if the difference exceeds said characteristic curve, said tripping signal being transmitted to the operating device (4) of the circuit breaker involved (Di) by means of the communication microprocessor (5) of the electronic protection device (1a) associated to the incoming line, the communication network (6) and the communication micro-processor (5) of the electrical protection device (1d) associated to the feeder line (Ldi) involved.

**2.** The device according to claim 1, characterized in that the processing unit (2) of the electronic protection device (1d) associated to a feeder line (Ldi) comprises means for producing second signals (Cdg), representative of correct operation of said processing unit, said second signals being transmitted to the communication network (6), the means (F9) for determining a malfunction taking said second signals into account.

**3.** The device according to claim 1, characterized in that the means (F9) for determining a malfunction detect failure of the processing unit (2) associated to the feeder line (Ldi) by the absence of receipt of first signals from said unit.

**4.** The device according to any one of the claims 1 to 3, characterized in that each electronic protection device (1a, 1d) comprises means (8) for determining the phase difference (∅) between the current signals measured by the associated measuring device and common reference signals, the first signals comprising signals representative of the phase difference.

5. The device according to claim 4, characterized in that the system being multiphase, each electronic protection device (1a, 1d) comprises means for measuring a voltage (U13) between two phases of the system, said voltage constituting said common reference.

6. The device according to any one of the claims 1 to 3, characterized in that each electronic protection device comprises synchronisation means (S) so as to associate a date to each current value in the first signals.

EP 0 723 325 B1

Fig.1 (art anterieur)

9

Fig.2 (art anterieur)

Fig.3

F1 — Mesure $I\vec{a}$

F2 — Fonction Protection Arrivée

F3 — Lecture de $I\vec{d1}$, $I\vec{d2}$, .....$I\vec{dn}$
Cdg1, Cdg2, .....Cdgn

F4 — $\Delta I = I\vec{a} - \sum_1^n I\vec{d}$

F5 — $i = 0$

F6 — $i = n$ ?    OUI

NON

F7 — $i = i + 1$

NON    Cdgi indiquant un défaut ?    F8

OUI

$I\ max = I\ max\ (di)$    F9

NON    $\Delta I > I\ max$ ?    F10

OUI

Signal décl. D (di)    F11

Fig.4

5

I ——— | μP de
Protection | ——— I = f(l,t)

S ———

Fig.5

8

I1 ——— | Filtre | ——— K.I1.U13.cosØ

U13 ——— | | ——— K.I1.U13.sinØ

Fig.6